Europäisches Patentamt

European Patent Office

Office européen des brevets

(11) Numéro de publication: **0 216 694 B1**

# FASCICULE DE BREVET EUROPEEN

(45) Date de publication de fascicule du brevet: **02.12.92**

(51) Int. Cl.⁵: **G02B 6/00**, G02B 23/26, B23K 26/04

(21) Numéro de dépôt: **86401987.2**

(22) Date de dépôt: **11.09.86**

(54) **Dispositif de contrôle en temps réel d'un soudage à pénétration totale, adapté à un joint inaccessible à l'observation directe.**

(30) Priorité: **16.09.85 FR 8513700**

(43) Date de publication de la demande: **01.04.87 Bulletin 87/14**

(45) Mention de la délivrance du brevet: **02.12.92 Bulletin 92/49**

(84) Etats contractants désignés: **CH DE GB LI NL**

(56) Documents cités:
**FR-A- 2 560 696**
**US-A- 3 278 738**
**US-A- 3 867 033**

(73) Titulaire: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Decailloz, Claude**
**1, Résidence Villebon**
**Villebon Sur Yvette F-91120 Palaiseau(FR)**
Inventeur: **Robin, Jean**
**5, rue Barbette**
**F-75003 Paris(FR)**
Inventeur: **Massy, Jean-Pierre**
**Cité Georges Lanson Bt.D. Rue du Docteur Banin**
**F-91220 Bretigny Sur Orge(FR)**

(74) Mandataire: **Mongrédien, André et al**
**c/o BREVATOME 25, rue de Ponthieu**
**F-75008 Paris(FR)**

EP 0 216 694 B1

## Description

La présente invention a pour objet un dispositif de contrôle en temps réel d'un soudage à pénétration totale et concerne plus particulièrement le contrôle du soudage d'un joint inaccessible à l'observation directe. Le dispositif de l'invention est adapté notamment au contrôle du soudage sur une pièce pratiquement fermée ou au soudage de deux tubes de grandes longueurs et de faibles diamètres.

L'assemblage par soudage à pénétration totale conduit à l'envers de la soudure à la formation d'un bain fondu lumineux, dans le cas du soudage TIG ou MIG par exemple, ou à la formation d'un plasma lumineux constitué de vapeurs métalliques plus ou moins ionisées, dans le cas du soudage par faisceau d'électrons ou par faisceau laser, accompagnées éventuellement de fines gouttelettes de métal fondu. La constatation de ces phénomènes en cours de soudage permet de garantir que la zone fondue a affecté la totalité de l'épaisseur des pièces à assembler.

Un dispositif de contrôle en temps réel d'un soudage à pénétration totale comprend, de manière connue, un moyen optoélectronique de détection de l'intensité lumineuse à l'envers du cordon de soudure au droit du point de soudage, un moyen de traitement du signal électrique délivré par ledit moyen de détection, et un moyen de signalisation.

On connaît un moyen de détection constitué d'un boîtier contenant un détecteur optoélectronique et un moyen de traitement optique. Il s'agit d'un moyen de détection volumineux qui ne peut être utilisé que lorsque l'envers du cordon de soudure est facilement accessible à l'observation.

On connaît également un moyen de détection constitué d'un ensemble de photodiodes et un moyen de détection constitué d'un ensemble de fibres optiques reliées à une photodiode. Dans ces deux moyens de détection connus, l'ensemble de photodiodes et l'ensemble de fibres optiques sont disposés de manière à détecter un signal lumineux sur une circonférence. Dans ces moyens de détection connus, chaque photodiode, ou chaque fibre optique, constitue un détecteur sensiblement omnidirectionnel. Le nombre de photodiodes, ou de fibres optiques, nécessaires pour observer la totalité du cordon de soudure est important. Ces moyens de détection sont donc volumineux et ne peuvent pas être utilisés pour le contrôle d'un soudage à pénétration totale d'un joint difficilement accessible à l'observation directe.

Un autre art antérieur est constitué par la demande FR-A-2 560 696 dans lequel est décrit un dispositif de commande du soudage de deux pièces métalliques. Le dispositif comprend une source d'énergie pour réaliser le soudage et un moyen pour détecter la lumière rayonnée par la vapeur dégagée au point de soudure. Ce moyen de détection, qui est susceptible de comprendre un détecteur optoélectronique ainsi qu'un faisceau de fibres optiques pour transmettre audit détecteur l'intensité lumineuse rayonnée au niveau de la soudure, est placé du même côté que la source d'énergie par rapport aux pièces à souder de manière à déterminer la profondeur de la soudure à partir du rayonnement lumineux.

Ce document ne divulgue pas la possibilité de réaliser le contrôle de l'envers d'un cordon de soudure.

L'invention a pour but de permettre le contrôle en temps réel d'un soudage à pénétration totale dans le cas d'un joint inaccessible ou difficilement accessible à l'observation directe. Ce but est essentiellement atteint par l'utilisation d'un moyen de détection comprenant un détecteur optoélectronique et une fibre optique unique, l'extrémité de cette fibre optique étant taillée en cône de manière à collecter un signal lumineux provenant d'un point quelconque du cordon de soudure.

De manière précise, l'invention a pour objet un dispositif de contrôle en temps réel d'un soudage à pénétration totale par détection de l'intensité lumineuse présente à l'envers du cordon de soudure au moment du soudage, ledit dispositif étant notamment adapté au contrôle de l'envers d'un joint inaccessible à l'observation directe, ledit dispositif comportant un moyen optoélectronique de détection de ladite intensité lumineuse présente à l'envers du cordon de soudure au moment du soudage, un moyen de traitement du signal électrique délivré par ledit moyen de détection et un moyen de signalisation, ledit dispositif étant caractérisé en ce que ledit moyen de détection optoélectronique comprend un détecteur optoélectronique et une fibre optique unique, ladite fibre comprenant une première extrémité reliée au détecteur optoélectronique et une seconde extrémité taillée en forme de cône, ladite seconde extrémité en forme de cône d'angle d'ouverture différent de 180° étant destinée à être maintenue immobile dans une position prédéterminée en regard, mais en retrait, de l'envers du cordon de soudure à former sur les pièces à souder, de façon à collecter l'intensité lumineuse présente à cet envers de cordon de soudure au moment du soudage tout en étant en dehors de portée des agressions thermiques ou mécaniques dues à la soudure, ledit angle d'ouverture dudit cône d'extrémité de la fibre optique étant choisi tel que le champ de vision qui en résulte pour ladite extrémité soit en mesure, lorsque cette dernière est maintenue immobile dans ladite position prédéterminée, d'appréhender la totalité du joint défini par les pièces à souder.

Selon un mode de réalisation préféré, l'angle du cône d'extrémité de la fibre optique est tel que la totalité du cordon de soudure est dans le champ de vision du détecteur optoélectronique, lorsque la fibre optique est maintenue immobile. De préférence, l'angle d'ouverture de ce cône est compris entre 25° et 45°.

Selon un mode de réalisation préféré, la fibre optique est, au moins partiellement, contenue dans une gaine. Celle-ci est avantageusement réalisée dans un matériau ductile qui constitue alors simultanément une protection et un support mécanique pour la fibre optique.

De manière préférée, le moyen de traitement est adapté pour délivrer au moyen de soudage un signal de commande de l'intensité du faisceau de soudage fonction de l'intensité du signal optique détecté. Ceci permet d'asservir la puissance du faisceau de soudage et d'assurer la pénétration totale du soudage.

Les caractéristiques et avantages de l'invention ressortiront mieux de la description qui va suivre, donnée à titre illustratif mais non limitatif, en référence aux dessins annexés, sur lesquels :

- la figure 1 repésente schématiquement un mode de réalisation du dispositif de contrôle de l'invention,
- la figure 2 illustre un mode de réalisation du moyen de détection du dispositif de l'invention,
- les figures 3a et 3b représentent respectivement un premier mode de réalisation de l'extrémité de la fibre optique et la caractéristique de transmission optique associée,
- les figures 4a et 4b représentent respectivement un second mode de réalisation de l'extrémité de la fibre optique et sa caractéristique de transmission optique associée, et
- les figures 5a et 5b représentent respectivement l'intensité du faisceau de soudage dans le cas d'un soudage par faisceau d'impulsions et l'intensité du signal optique relevé à l'envers de la soudure en fonction de ce faisceau d'impulsions.

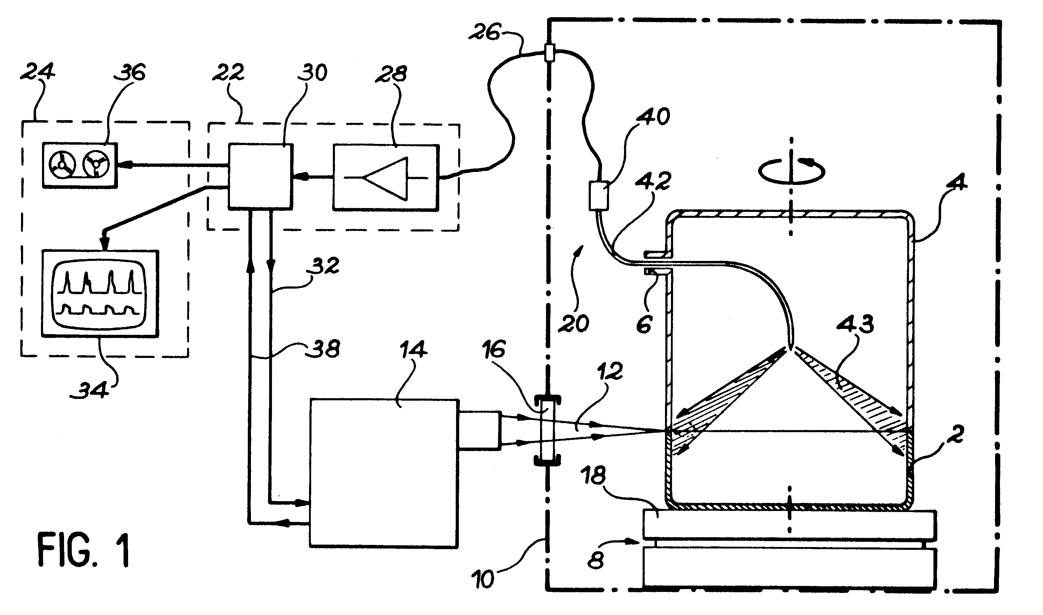

On a représenté schématiquement sur la figure 1 un système de soudage muni d'un dispositif de contrôle conforme à l'invention. A titre d'exemple, on a représenté le cas du soudage, par un faisceau laser à impulsions, d'un appareil à pression à haute performance. Cependant, il est clair que le dispositif de contrôle de l'invention n'est pas lié à la nature du moyen de soudage mais peut au contraire être associé à tout moyen de soudage connu, notamment soudage par faisceau d'électrons, soudage TIG, MIG ou MAG.

L'appareil qui doit être soudé se compose d'un fond 2 et d'une virole 4. Ces deux pièces ont la forme générale d'un cylindre creux muni d'un fond. La virole 4 est munie d'une petite ouverture 6.

L'assemblage des deux pièces à souder forme un cylindre creux fermé.

Dans le cas d'une soudure par faisceau laser, les deux pièces à souder sont disposées sur un support 8 disposé sous atmosphère inerte dans une enceinte de soudage 10. Le faisceau laser 12 délivré par le moyen de soudage 14, extérieur à l'enceinte de soudage, pénètre dans l'enceinte de soudage par un hublot 16. Le moyen de soudage est fixe. Le soudage sur la totalite du joint entre les deux pièces est obtenu par rotation de ces pièces autour d'un axe vertical. Cette rotation peut être obtenue par un plateau tournant 18 constituant la partie supérieure du support 8.

Le dispositif de contrôle du soudage comprend un moyen de détection optoélectronique 20, un moyen de traitement 22 et un moyen de signalisation 24. Le moyen de détection 20 est disposé dans l'enceinte de soudage 10. Il est reliée au moyen de traitement 22 par une liaison électrique 26 traversant la paroi de l'enceinte de soudage 10. Le moyen de traitement 22 peut comprendre un amplificateur 28 suivi d'un moyen d'asservissement 30 destiné à commander, par une voie 32, la puissance du faisceau du moyen de soudage 14 en fonction du signal optique détecté à l'envers du joint. Le moyen de signalisation 24 peut comprendre un moyen de visualisation 34 (table traçante, écran ou autre) et un moyen d'enregistrement 36. Ces moyens 34 et 36 reçoivent simultanément un premier signal électrique correspondant au signal optique détecté et un second signal électrique correspondant à l'intensité du faisceau de soudage. Ce second signal est délivré par le moyen de soudage au moyen de traitement 22 sur une voie 38.

Conformément à l'invention, le moyen de détection 20 comprend un détecteur optoélectronique 40 et une fibre optique 42 unique. Cette fibre est de préférence protégée des agressions mécaniques (projections, vapeurs métalliques, gouttelettes de métal liquide ou autre) par une gaine. De manière avantageuse, cette gaine est réalisée en un matériau ductile, par exemple en acier inoxydable ou en cuivre. Ceci permet de conformer la fibre optique de façon à ce qu'elle suive un trajet bien défini et à ce qu'elle reste dans la position optimale sans dispositif particulier de fixation.

Le moyen de détection optique de l'invention présente ainsi les avantages d'un très faible encombrement et d'une très grande flexibilité lui permettant d'atteindre des régions inaccessibles, ou très difficilement accessibles, à l'observation directe.

Conformément à l'invention, l'extrémité de la fibre optique recueillant le signal lumineux au revers du joint est taillée en forme de cône. L'angle de ce cône définit l'ouverture du champ de vision 43 et permet de disposer la fibre hors de portée des agressions mécaniques ou thermiques dues à la soudure, pouvant endommager l'extrémité de la fibre ou simplement perturber la mesure.

La longueur de la fibre est prévue suffisante pour éloigner le détecteur optoélectronique 40 de la zone de soudage afin qu'il ne gêne pas l'exécution de la soudure et que son fonctionnement ne soit pas perturbé par l'environnement (champ électrique ou magnétique, échauffement, atmosphère de soudage ou autre).

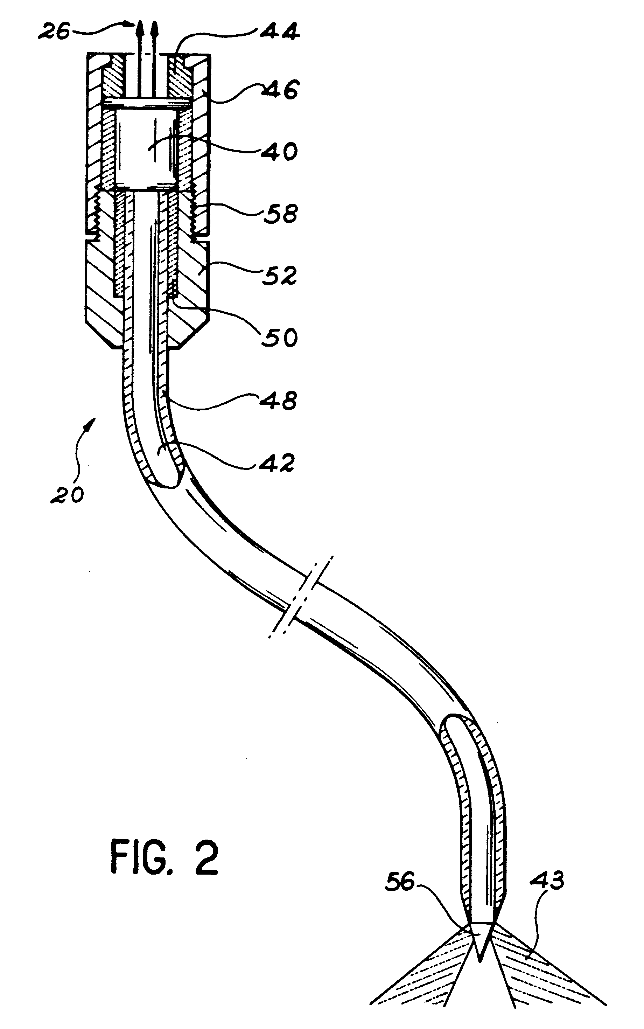

On a représenté sur la figure 2 une coupe longitudinale du moyen de détection optique. Le détecteur optoélectronique 40, constitué par exemple d'une photodiode, est protégé par un isolant 44 et disposé dans un support cylindrique 46. Sa partie optique sensible est disposée en regard d'une extrémité de la fibre optique 42. Celle-ci est protégée par une gaine 48 qui est positionnée dans sa partie supérieure, par une collerette 50. Cette partie supérieure est contenue dans un support 52. L'extrémité 56 de la fibre optique collectant le signal optique est taillée en forme de cône. Le champ de vision 43 du moyen de détection optique dépend de l'ouverture de ce cône.

De préférence, le support 46 du détecteur optoélectronique et le support 52 de la fibre optique sont munis de moyens d'accrochage 58 qui coopèrent. Cette conception permet de rendre la fibre optique interchangeable et d'adapter ainsi le moyen de détection optique à la géométrie de la soudure à contrôler.

Sur la figure 1, on a représenté le cas où l'observation de l'envers du cordon de soudure est délicate car la pièce soudée constitue un volume fermé. Le dispositif de contrôle de l'invention peut également être utilisé avantageusement, par exemple, dans le cas du soudage de deux tubes de grandes longueurs et de faibles diamètres. L'observation directe de l'envers du cordon de soudure, qui n'est pas possible avec les moyens de détection optique selon l'art antérieur, ne présente pas de difficulté avec le moyen de détection optique de l'invention. Dans tous les cas, l'extrémité de la fibre optique est définie de telle sorte que son champ de vision couvre la totalité de l'envers du cordon de soudure. L'angle d'ouverture du cône d'extrémité de la fibre optique permet également d'adapter le champ de vision en fonction de la position et du diamètre de la soudure.

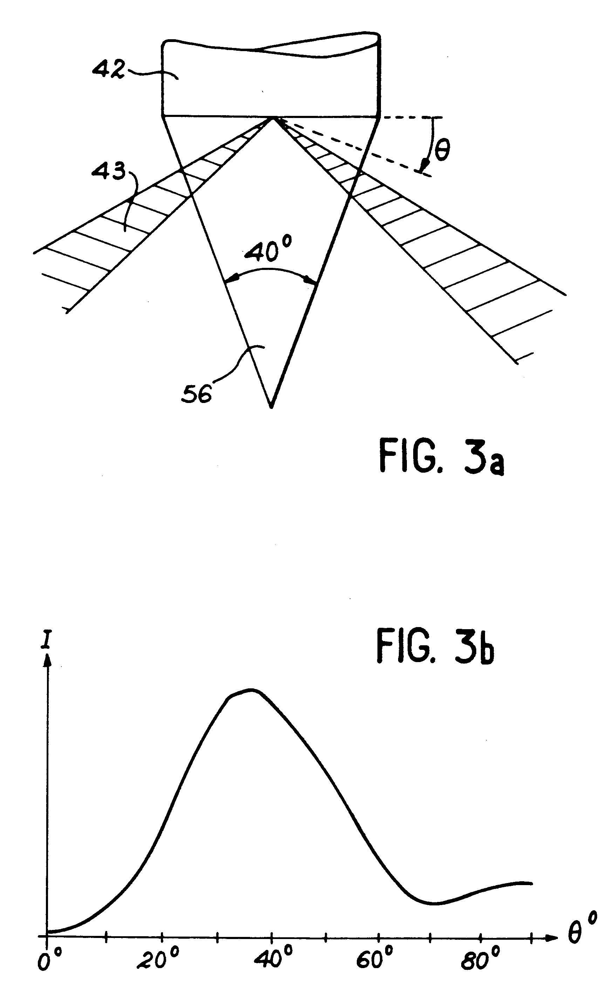

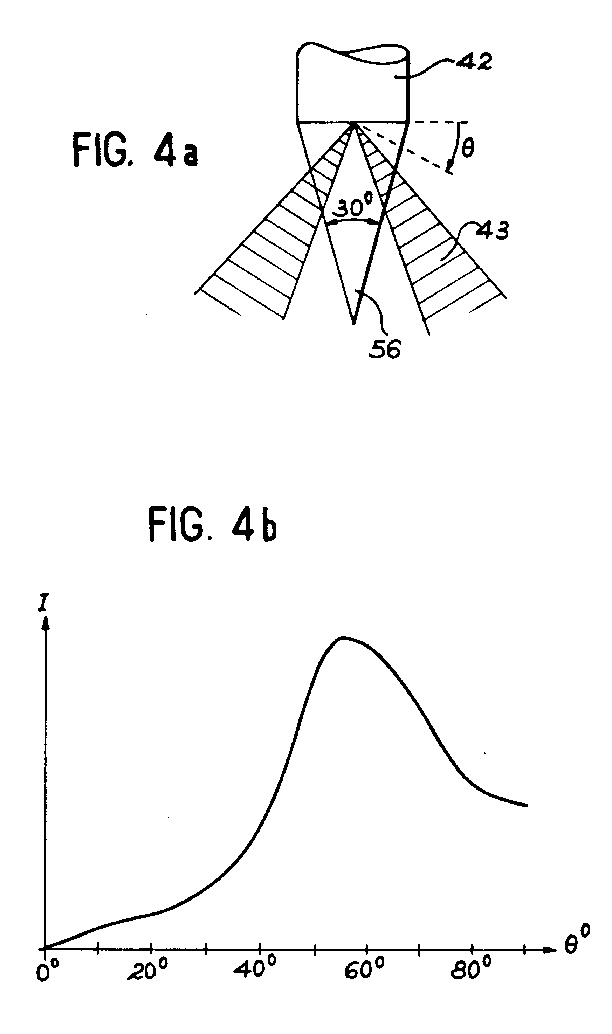

Les figures 3a et 4a illustrent deux formes différentes de l'extrémité de la fibre optique. Les figures 3b et 4b illustrent le pouvoir de transmission correspondant à chacune de ces fibres en fonction de l'angle d'incidence d'un signal lumineux.

Sur la figure 3a l'ouverture du cône d'extrémité 56 de la fibre optique 42 est de 40°. Le graphique de la figure 3b, représentant l'intensité lumineuse transmise par la fibre optique en fonction de l'angle d'incidence $\theta$ d'un signal lumineux, montre que le champ de vision 43 est compris entre les incidences et 45 environ. Compte tenu de l'éloignement nécessaire de l'extrémité de la fibre optique du point de soudage, pour éviter les agressions mécaniques, ce champ de vision est adapté au contrôle d'une opération de soudage sur un joint circulaire d'environ 200mm de diamètre.

Sur la figure 4a, l'ouverture du cône d'extrémité 56 est de 30°. La courbe de la figure 4b montre qu'alors le champ de vision 43 est compris entre les incidences de 50 à 60° environ. Un tel champ de vision est particulièrement adapté au contrôle d'une soudure sur un joint ayant un diamètre de l'ordre de 100 mm.

On a représenté sur la figure 5a l'énergie E en fonction du temps t du faisceau de soudage obtenu par un laser YAG (semiconducteur au grenat d'aluminium et d'yttrium). Il s'agit d'un soudage point par point, le soudage étant constitué par une succession de points avec recouvrement, ce qui assure une soudure continue.

Lorsque le soudage est à pénétration totale, il y a, pour chaque impulsion du faisceau laser, apparition à l'envers de la soudure d'un panache de plasma et d'un signal lumineux correspondant. La présence ou l'absence de ce signal lumineux détecté au moyen du capteur optoélectronique permet d'apprécier l'état de la soudure à l'envers du cordon de soudure.

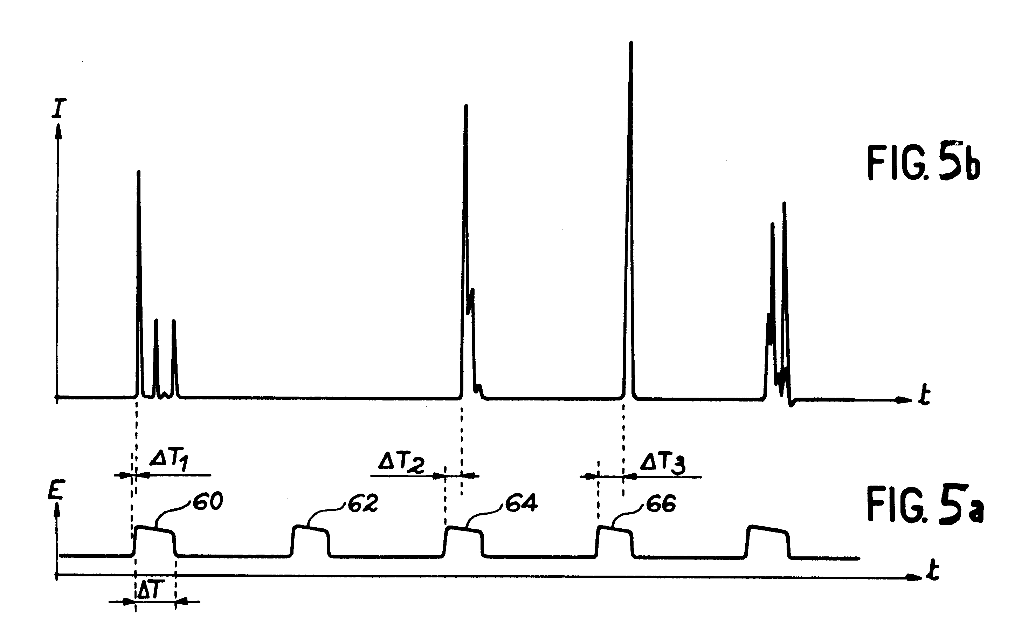

On a représenté sur la figure 5b l'intensité du signal lumineux détecté, en correspondance avec l'intensité du faisceau laser.

Le délai séparant le début du signal de l'impulsion laser du début du signal lumineux à l'envers de la soudure est significatif de la qualité de la pénétration de la soudure. Pour l'impulsion 60 du faisceau laser, le délai $\Delta T_1$ est faible : il y a surpénétration. Pour l'impulsion 62, aucun signal lumineux n'apparaît à l'envers du cordon de soudure : il y a sous-pénétration. Pour l'impulsion 64, le délai $\Delta T_2$ indique une pénétration normale. Enfin, pour l'impulsion 66, le délai $\Delta T_3$ est pratiquement égal à la durée $\Delta T$ de l'impulsion laser : la pénétration totale est tout juste atteinte.

Les chronogrammes des figures 5a et 5b permettent d'apprécier la qualité de la pénétration de la soudure, de localiser les éventuels manques de pénétration et leurs coordonnées par rapport à la position de référence de départ de la soudure. Ils permettent également de décider de la nécessité éventuelle d'une réparation de la soudure dans la zone où la pénétration est jugé insuffisante compte tenu du pas de recouvrement des points de soudage.

Dans le cas où le moyen de traitement du dispositif de contrôle comprend un moyen d'asservissement de la puissance du moyen de soudage, le signal représenté sur la figure 5b est utilisé pour asservir la puissance du moyen de soudage. Cette puissance est augmentée au vu du signal optique correspondant aux impulsions 62 et 66 de l'impulsion du faisceau laser et diminuée au vu du signal optique correspondant à l'impulsion 60 du faisceau laser.

**Revendications**

1. Dispositif de contrôle en temps réel d'un soudage à pénétration totale par détection de l'intensité lumineuse présente à l'envers du cordon de soudure au moment du soudage, ledit dispositif étant notamment adapté au contrôle de l'envers d'un joint inaccessible à l'observation directe, ledit dispositif comportant un moyen optoélectronique (20) de détection de ladite intensité lumineuse présente à l'envers du cordon de soudure au moment du soudage, un moyen (22) de traitement du signal électrique délivré par ledit moyen de détection (20) et un moyen de signalisation (24), ledit dispositif étant caractérisé en ce que ledit moyen de détection optoélectronique (20) comprend un détecteur optoélectronique (40) et une fibre optique unique (42), ladite fibre comprenant une première extrémité reliée au détecteur optoélectronique (20) et une seconde extrémité taillée en forme de cône (56), ladite seconde extrémité en forme de cône (56) d'angle d'ouverture different de 180° étant destinée à être maintenue immobile dans une position prédéterminée en regard, mais en retrait, de l'envers du cordon de soudure à former sur les pièces à souder, de façon à collecter l'intensité lumineuse présente à cet envers de cordon de soudure au moment du soudage tout en étant en dehors de portée des agressions thermiques ou mécaniques dues à la soudure, ledit angle d'ouverture dudit cône d'extrémité (56) de la fibre optique étant choisi tel que le champ de vision (43) qui en résulte pour ladite extrémité (56) soit en mesure, lorsque cette dernière est maintenue immobile dans ladite position prédéterminée, d'appréhender la totalité du joint défini par les pièces à souder.

2. Dispositif selon la revendication 1, caractérisé en ce que l'angle d'ouverture dudit cône d'extrémité (56) est compris entre 25° et 45°.

3. Dispositif selon l'une quelconque des revendications 1 et 2, caractérisé en ce que la fibre optique (42) est, au moins partiellement, contenue dans une gaine (48).

4. Dispositif selon la revendication 3, caractérisé en ce que ladite gaine (48) est réalisée dans un métériau ductile.

5. Dispositif selon l'une quelconque des revendications 1 à 4, caractérisé en ce que le moyen de traitement (22) est adapté pour délivrer un signal de commande de l'intensité du faisceau de soudage en fonction de l'intensité du signal optique détecté.

**Claims**

1. Apparatus for the real time checking or inspection of a total penetration weld by the detection of the light intensity present on the back of the welding bead at the time of welding, said apparatus being in particular suitable for checking the back of a joint inaccessible to direct observation, said apparatus incorporating an optoelectronic detection means (20) of said light intensity present on the back of the welding bead at the time of welding, a means (22) for processing the electric signal supplied by said detection means (20) and a signalling means (24), said apparatus being characterized in that the optoelectronic detection means (20) comprises an optoelectronic detector (40) and a single optical fibre (42), said fibre having a first end connected to the optoelectronic detector (20) and a second end (56) cut in cone-shaped manner and which has an aperture angle different from 180° and which is kept stationary in a predetermined facing, but set back position with respect to the back of the welding bead to be formed on the parts to be welded, so as to collect the light intensity present on the back of said welding bead at the time of welding, whilst being out of reach for thermal or mechanical actions resulting from the welding, the aperture angle of the end cone (56) of the optical fibre being chosen so that the field of vision (43) resulting therefrom for said end (56) is able, when the latter is kept stationary in said predetermined position, to cover the entire joint defined by the parts to be welded.

2. Apparatus according to claim 1, characterized in that the aperture angle of the end cone (56) is between 25° and 45°.

3. Apparatus according to either of the claims 1 and 2, characterized in that the optical fibre (42) is at least partly contained in a sheath (48).

4. Apparatus according to claim 3, characterized in that the sheath (48) is made from a ductile material.

5. Apparatus according to any one of the claims 1 to 4, characterized in that the processing means (22) supplies a signal for controlling the intensity of the welding beam as a function of the intensity of the detected optical signal.

**Patentansprüche**

1. Vorrichtung zur Echtzeitkontrolle einer Schweißung mit vollständigem Eindringen durch Detektion der Leuchtintensität, die an der Kehrseite der Schweißnaht im Moment der Schweißung vorhanden ist, wobei die Vorrichtung insbesondere geeignet ist zur Kontrolle von der Rückseite einer der direkten Beobachtung nicht zugänglichen Verbindung, wobei die Vorrichtung eine optoelektronische Einrichtung (20) zum Feststellen der Leuchtstärke, die auf der Rückseite der Schweißnaht im Moment des Schweißens vorhanden ist, eine Einrichtung (22) zur Verarbeitung des elektrischen Signals, das von der Feststelleinrichtung (20) erzeugt wird, und eine Signalisierungseinrichtung (24) umfaßt, wobei die Vorrichtung dadurch gekennzeichnet ist, daß die optoelektronische Feststelleinrichtung (20) einen optoelektronischen Detektor (40) und eine einzige optische Faser (42) umfaßt, wobei die Faser ein erstes Ende, das mit dem optoelektronischen Detektor (20) verbunden ist, und ein zweites in der Form eines Kegels (56) geschnittenes Ende umfaßt, wobei das zweite Ende in der Form eines Kegels (56) mit einem Öffnungswinkel, der von 180° verschieden ist, dazu bestimmt ist, unbeweglich in einer vorgegebenen Position gegenüber, aber zurückgezogen von, der Rückseite der auf den zu schweißenden Teilen zu bildenden Schweißnaht gehalten zu werden, so daß es die Leuchtstärke, die auf der Rückseite der Schweißnaht im Moment des Schweißens vorhanden ist, sammelt, wobei es außerhalb der Reichweite der thermischen oder mechanischen Angriffe aufgrund der Schweißung ist, wobei der Öffnungswinkel des Endkegels (56) der optischen Faser so gewählt ist, daß das Blickfeld (43), das für das Ende daraus resultiert, in der Lage ist, während letzteres in der vorgegebenen Stellung unbeweglich gehalten wird, die Gesamtheit der von den zu schweißenden Teilen gebildeten Verbindung zu erfassen.

2. Vorrichtung nach Anspruch 1, dadurch gekennzeichnet, daß der Öffnungswinkel des Endkegels (56) zwischen 25° und 45° liegt.

3. Vorrichtung nach einem der Ansprüche 1 und 2, dadurch gekennzeichnet, daß die optische Faser (42) wenigstens teilweise in einer Hülle (48) enthalten ist.

4. Vorrichtung nach Anspruch 3, dadurch gekennzeichnet, daß die Hülle (48) aus einem duktilen Material hergestellt ist.

5. Vorrichtung nach einem der Ansprüche 1 bis 4, dadurch gekennzeichnet, daß die Verarbeitungseinrichtung (22) geeignet ist, ein Steuerungssignal für die Intensität des Schweißstrahls in Abhängigkeit von der Intensität des festgestellten optischen Signal zu erzeugen.

FIG. 1

FIG. 2

FIG. 3a

FIG. 3b

FIG. 4 a

FIG. 4 b

FIG. 5b

FIG. 5a

$\Delta T_1$ 60

$\Delta T_2$ 62 64

$\Delta T_3$ 66

$\Delta T$

EP 0 216 694 B1